**Europäisches Patentamt**

**European Patent Office**

**Office européen des brevets**

(19)

(11) Veröffentlichungsnummer : **0 105 142
B1**

(12)                      # EUROPÄISCHE PATENTSCHRIFT

(45) Veröffentlichungstag der Patentschrift :
**08.07.87**

(21) Anmeldenummer : **83107937.1**

(22) Anmeldetag : **11.08.83**

(51) Int. Cl.⁴ : **B 29 C 47/12**

(54) **Vorrichtung zum Strangpressen von thermoplastischen Kunststoffen.**

(30) Priorität : **08.09.82 DE 3233250**

(43) Veröffentlichungstag der Anmeldung :
**11.04.84 Patentblatt 84/15**

(45) Bekanntmachung des Hinweises auf die Patenterteilung : **08.07.87 Patentblatt 87/28**

(84) Benannte Vertragsstaaten :
**AT BE CH DE FR GB IT LI NL SE**

(56) Entgegenhaltungen :
**DE-A- 1 940 195
DE-A- 2 153 466
DE-B- 1 140 337
FR-A- 1 572 864
FR-A- 2 427 897
US-A- 3 234 597**

(73) Patentinhaber : **BASF Aktiengesellschaft
Carl-Bosch-Strasse 38
D-6700 Ludwigshafen (DE)**

(72) Erfinder : **Fischer, Ernst
Kirchenstrasse 91a
D-6700 Ludwigshafen (DE)**
Erfinder : **Laun, Martin, Dr.
Duererstrasse 22
D-6700 Ludwigshafen (DE)**
Erfinder : **Kraemer, Albert
Weisenheimer Strasse 27
D-6700 Ludwigshafen (DE)**

EP 0 105 142 B1

0 105 142

## Beschreibung

Die vorliegende Erfindung betrifft eine Vorrichtung zum Strangpressen von thermoplastischen Kunststoffen, bei der die Kunststoffschmelze mit Hilfe von Fördereinrichtungen durch ein Strangpreßwerkzeug gefördert wird, dessen Austrittsspalt Wandvertiefungen aufweist.

Schmelzen thermoplastischer Kunststoffe sind viskoelastische Flüssigkeiten, die sich dadurch auszeichnen, daß sie sich bei langsamer Verformung wie eine viskose Flüssigkeit, bei rascher Verformung wie ein elastischer Stoff verhalten.

Schmelzen thermoplastischer Kunststoffe werden in sogenannten Strangpreßwerkzeugen oder Düsen zu strangförmigen Gebilden in Form von Monofils, Folien, Platten, Rohren oder Profilen geformt, die entweder nach dem Abkühlen und Erstarren ein Halbzeug darstellen oder als warmplastisches Gebilde in derselben Wärme einem weiteren Verformungsschritt zur Bildung von Hohlkörpern, Schlauchfolien oder Tiefziehteilen unterzogen werden.

Zum Fördern der Schmelze durch das Strangpreßwerkzeug dient im allgemeinen eine Schneckenpresse (Extruder), die in der Regel auch das Aufschmelzen bzw. Aufbereiten des Kunststoffes bewirkt. Es sind aber auch andere Fördereinrichtungen, wie z. B. Spinnpumpen, üblich. Im Strangpreßwerkzeug wird der aus der Fördereinrichtung kommende Strang durch eine besondere Gestaltung der Fließkanäle zur gewünschten strangförmigen Gestalt umgeformt, wobei dem von der Masse kurz vor ihrem Austritt aus dem Werkzeug durchflossenen Spaltbereich (Austrittsspalt) eine wichtige Bedeutung bei der Formung der Masse und bei dem aufzuwendenden Förderdruck zukommt.

Aus wirtschaftlichen Gründen strebt man beim Strangpressen (Extrudieren) einen möglichst hohen Massedurchsatz und einen möglichst niedrigen Energieaufwand an. Der Energieaufwand ist umso höher, je höher die Viskosität der Masse und je enger der Austrittsspalt ist. Auch die mechanische Belastung der Fördereinrichtung (Extruder) ist in solchen Fällen unerwünscht hoch.

Bei gleichbleibendem Massedurchsatz durch ein Strangpreßwerkzeug ist der Energieaufwand (Förderdruck) umso höher, je höher die Scherviskosität einer Schmelze ist. So haben beispielsweise Schmelzen von für die Extrusion üblichen Typen von linearem Polyethylen niederer Dichte (LLDPE) und von Polyethylen hoher Dichte (HDPE) eine erheblich höhere Zähigkeit als die von verzweigtem Polyethylen niederer Dichte (LDPE).

Bei Versuchen, mit LLDPE und HDPE ähnlich hohe Durchsatzmengen zu erreichen wie bei LDPE, kann es neben der aus der höheren Zähigkeit bedingten Erhöhung des Förderdrucks auch zu Fließinstabilitäten des aus der Düse austretenden Extrudats kommen. Diese Fließinstabilitäten äußern sich durch Pulsieren und örtliches (partielles) Voreilen des austretenden Schmelzestranges (J. Meißner, Kunststoffe 81 (1971), S. 688 ; E. Uhland, Rheol. Acta, 18 (1979), S. 1-24).

Zur Senkung des Förderdruckes und zur Behebung der Fließinstabilitäten können eine Erweiterung des Austrittsspaltes und eine Erhöhung der Massetemperatur beitragen. Alle diese Maßnahmen bringen jedoch Nachteile mit sich :

Die Erweiterung des Austrittsspaltes ist nur bei den Extrusionsverfahren möglich, wo, wie bei der Folienherstellung durch Breitschlitz- oder Schlauchextrusion, der Massestrang durch eine anschließende Längs- bzw. Querverformung seine endgültige Dicke bekommt. Nachteilig daran ist, daß die dadurch größere Dicke des austretenden Massestranges Probleme bei der anschließenden Verstreckung und Abkühlung verursacht. Eine Vergrößerung des Austrittsspaltes kann zudem auch dazu führen, daß sich im Massestrang Markierungslinien nachteilig auswirken, die durch eine vorausgegangene Aufteilung des Massestromes im Strangpreßwerkzeug, beispielsweise durch Dornhalterstege, verursacht worden sind.

Die Erhöhung der Massetemperatur birgt die Gefahr einer Materialschädigung in sich und beeinflußt das Abkühlverhalten. Die damit verbundene Veränderung der Dehnviskosität kann auch die Stabilität des warmplastischen Massestranges und seine weitere Handhabung nachteilig beeinflussen.

Es ist ferner bekannt, am aus der Düse austretenden Massestrang auftretende Oberflächenrauhigkeiten (Haifischhaut) dadurch zu beseitigen, daß die Temperatur der Wandungen des Austrittsspaltes erhöht wird. Diese Maßnahme hat aber keinen oder nur einen unbedeutenden Einfluß auf den Förderdruck.

Nach Metzger und Hamilton, SPE Transactions 4 (1964), S. 107-112, können Fließinstabilitäten durch Verwendung einer Düse aus Polytetrafluorethylen (PTFE) beseitigt werden. Es ist auch bekannt, daß eine Beschichtung der Düsenwandungen mit PTFE eine Verringerung des Förderdruckes bewirken kann. Erfahrungsgemäß verbrauchen sich aber solche PTFE-Beschichtungen im Laufe der Zeit, so daß sie immer wieder erneuert werden müssen.

Nach Offermann, Dissertation TH Aachen 1972, ist auch schon versucht worden, die Strömung einer Polymerschmelze durch Kapillaren dadurch zu beeinflussen, daß die Oberfläche einer Bohrung mit verschiedenen Rauhigkeitsgraden versehen wurde. So wurde z. B. in eine Bohrung von 4 mm Durchmesser ein Gewinde M5 eingeschnitten. Eine gewindeartige Profilierung einer Bohrung ist aber nicht geeignet, eine Verringerung des Förderdruckes zu erreichen, weil hier jede, senkrecht zur Gewindeachse gelegte Schnittfläche dieselbe Größe aufweist und somit ein pulsierendes Verhalten der Schmelze nicht eintritt.

In einem weiteren Versuch wurde eine Bohrung mit einem Sägezahnprofil versehen, das in seinen Abmessungen dem obengenannten Gewindeprofil entsprach (Rheol. Acta Vol. 20, No. 6 (1981), S. 558).

2

Die Versuche haben aber gezeigt, daß auch eine solche Profilierung keinen Einfluß auf das Strömungsprofil hat.

Eine weitere Maßnahme zur Verringerung des Förderdruckes ist nach Barnes u. A., Rheol. Acta (1971), S. 517ff und G. Nonn, Fortschr. Ber. VDI-Z, Reihe 3, Nr. 62 (1981) dadurch möglich, daß der durchgesetzten viskoelastischen Flüssigkeit eine Pulsation in Form eines sich zeitlich ändernden Förderstromes aufgezwungen wird. Trotz gleichen mittleren Volumenstroms sinkt hier der zeitlich gemittelte Druckbedarf im Vergleich zum Fall des zeitlich konstanten, nicht pulsierenden Durchsatzes. Diese Verfahrensweise ist für die praktische Extrusion nicht anwendbar, weil die somit erzeugten Stränge eine ungleichmäßige Dicke haben.

Somit bestand die Aufgabe, die Kunststoffschmelze auf dem Weg durch den Austrittsspalt einer Pulsation zu unterwerfen, die zeitlich nicht veränderlich ist und bei konstantem Förderdruck erfolgt.

Erfindungsgemäß wurde diese Aufgabe durch eine besondere Gestaltung der Fließkanalwandungen gemäß den Merkmalen des Hauptanspruchs gelöst. Vorteilhafte Ausgestaltungen der Erfindung sind Gegenstand der Unteransprüche 2 bis 5.

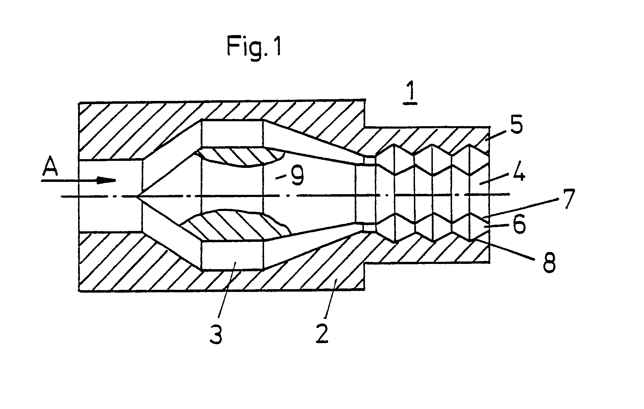

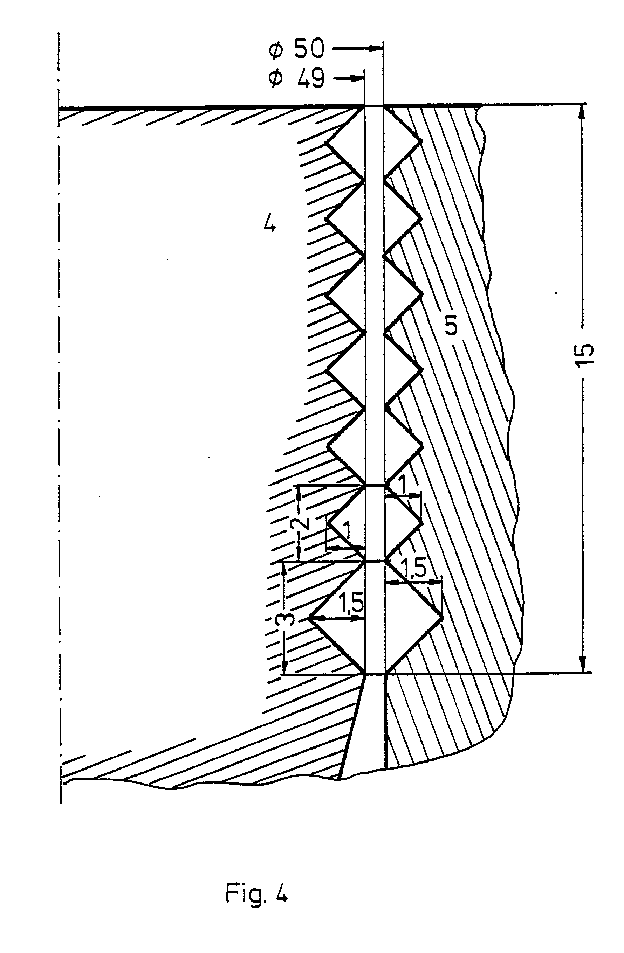

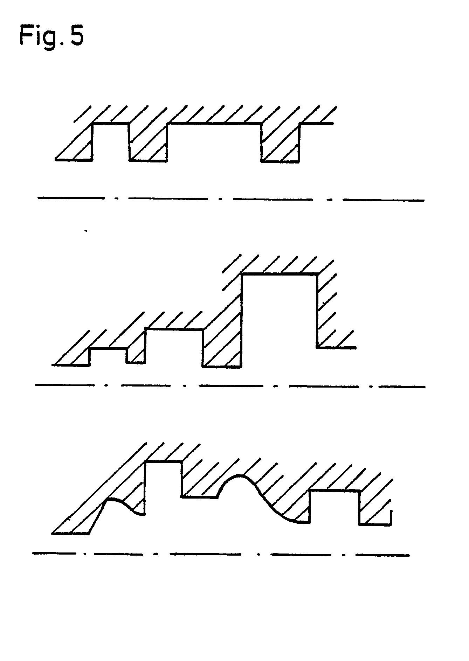

Der Erfindungsgegenstand wird nachstehend anhand der Figuren 1 bis 5 beschrieben.

Figur 1   zeigt die schematische Schnittdarstellung eines Strangpreßwerkzeuges.

Figur 2   zeigt schematisch ein erfindungsgemäßes Wandelement für die Gestaltung eines Austrittsspaltes (Fließkanals).

Figur 3   stellt ein anderes Wandelement dar.

Figur 4   ist ein Ausschnitt eines unter Verwendung von Wandelementen nach Figur 2 gebildeten Austrittsspaltes für eine ringförmige Düse. Die dort angegebenen Maße beziehen sich auf die Düse, mit der die unten angegebenen Beispiele ermittelt worden sind.

Figur 5   zeigt Austrittsspalte, die aus einer Kombination von Wandelementen bestehen, die durch stetige und unstetige Kurvenzüge gebildet werden. Die Länge der Elemente und die Größe der Vertiefungen ändern sich in Fließrichtung.

Figur 6   zeigt die Abhängigkeit des Extrusionsdruckes von der scheinbaren Schergeschwindigkeit bei der Extrusion einer Kunststoffschmelze durch zwei verschiedene Kapillaren.

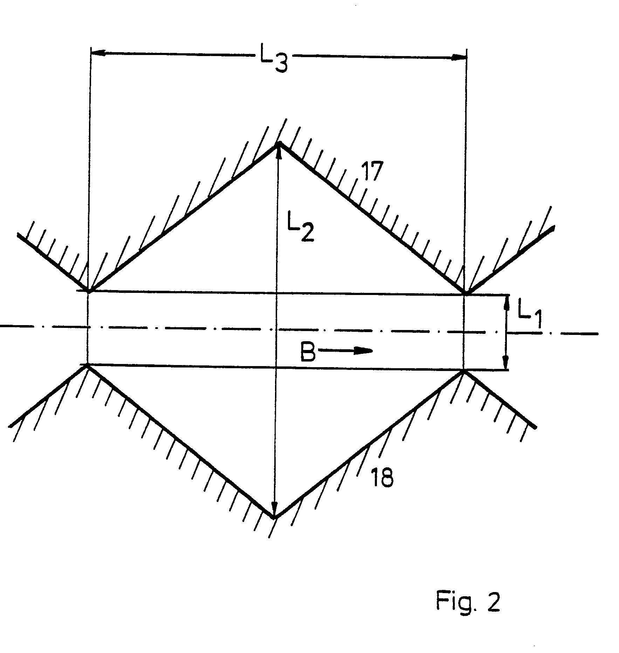

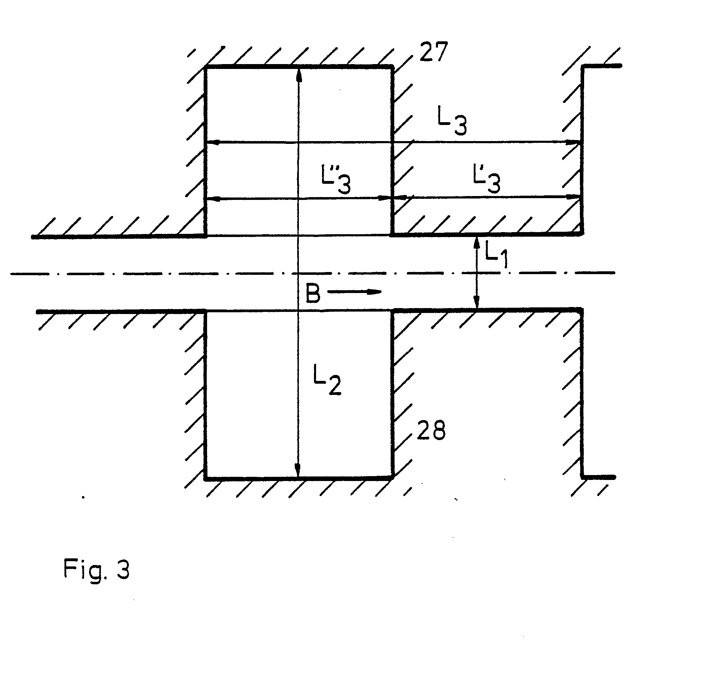

Das Strangpreßwerkzeug 1 besteht aus einem Gehäuse 2 und einem Verdrängerkörper 9. Der Verdrängerkörper 9 wird über Stege 3 im Inneren des Gehäuses 2 festgehalten, so daß er unter der Wirkung der in Pfeilrichtung A durch das Strangpreßwerkzeug strömenden Kunststoffschmelze keine Verlagerung erfährt. Am Austrittsende des Verdrängerkörpers 9 befindet sich ein Dorn 4, der zusammen mit dem ihn umgebenden Düsenmundstück 5 einen Austrittsspalt 6 bildet. Dieser Austrittsspalt 6 kann eben, ringförmig oder in einer beliebig anderen Form so gestaltet sein, wie es die jeweilige Geometrie des herzustellenden strangförmigen Gebildes bedingt. Dieser Austrittsspalt 6 weist erfindungsgemäß Vertiefungen 7, 8 auf, die Erweiterungen des Austrittsspaltes 6 bilden. Diese Vertiefungen 7, 8 können verschiedene Querschnittsflächen haben, z. B. in Form von Dreiecken 17, 18 (Figur 2) oder von Rechtecken 27, 28 (Figur 3). Auch wellenförmige Schnitte der Vertiefungen, beispielsweise mit sinusförmigem oder mit stetigem und unstetigem Kurvenverlauf sind möglich. Ebenso ist es möglich, solche Wandelemente mit unterschiedlichen Längen und unterschiedlichen Spaltweiten miteinander zu kombinieren. Eine solche Kombination ist vorteilhaft, wenn der Förderdruck auf einen gezielten Wert einzustellen ist und wenn Einfluß auf die Oberflächenstruktur des extrudierten Stranges genommen werden soll.

Strömt die Kunststoffschmelze in Pfeilrichtung B (Figur 2, Figur 3) durch einen mit einer erfindungsgemäßen Wandvertiefung versehenen Spalt, so wird in einem strömenden Volumenelement der Aufbau einer zeitlich konstanten Schubspannung immer wieder gestört, weil die Querschnittveränderungen örtliche Pulsationen in der Schmelze und damit eine ständige Veränderung der Dehnströmungskomponenten erzwingen. Bei geeigneten Abmessungen der Wandvertiefungen kann daraus bei bestimmten viskoelastischen Flüssigkeiten eine Verringerung des Förderdruckes resultieren. Dies gilt für solche Materialien, bei denen der Minderverbrauch an Scherenergie größer ist als der durch die Querschnittsveränderungen aufzubringende Druckenergieanteil, wie z. B. LLDPE und HDPE.

Der gewünschte, den Förderdruck senkende Effekt wird dann erreicht, wenn

die kleinste Spaltweite L1 größer als 0,3 mm und wenn das Verhältnis von größter Spaltweite L2 zu kleinster Spaltweite L1, L2/L1 $\geqslant$ 1,5 ist,

die Länge L3 eines Vertiefungselementes bei solchen mit dreieckigem bzw. sinusförmigem Querschnitt so gewählt wird, daß das Verhältnis L3/L2 größer als 0,5 und kleiner als 3 ist.

Bei Vertiefungen mit rechteckigem Querschnitt bezeichnet L3' die Länge des unvertieften Wandbereiches und L3" die Länge der größten Vertiefung. Die Gesamtlänge des Vertiefungselementes L3 ist L3' + L3".

Für die Bemessung von L3' gilt : L3' $\leqslant$ L3/2

Anhand des folgenden Beispiels wird gezeigt, daß bei der Verarbeitung von LLDPE und HDPE ein erfindungsgemäß gestalteter Austrittsspalt an einer Ringdüse für die Schlauchfolienextrusion eine bedeutende Verringerung des Förderdruckes gegenüber einem Spalt mit glatten Wandungen mit sich bringt.

Beispiel 1

| Material | Durchsatz | Druck | |
|---|---|---|---|
| | | beide Wände glatt | beide Wände profiliert |
| | $\underline{/}$kg/h$\underline{7}$ | $\underline{/}$bar$\underline{7}$ | $\underline{/}$bar$\underline{7}$ |
| LLDPE | 1,8 | 200 | 130 |
| $MFI_{190/2,16}$ | 3,4 | 250 | 160 |
| = 0,8 g/10 min | 4,6 | 275 | 180 |
| Dichte = | 6,0 | 290 | 195 |
| 0,922 g/cm³ | 7,3 | 310 | 210 |
| HDPE | 1,9 | 150 | 110 |
| $MFI_{190/21,6}$ | 3,0 | 170 | 125 |
| = 10 g/10 min | 4,2 | 190 | 150 |
| Dichte = | 5,3 | 200 | 160 |
| 0,957 g/cm³ | 5,8 | 205 | 165 |

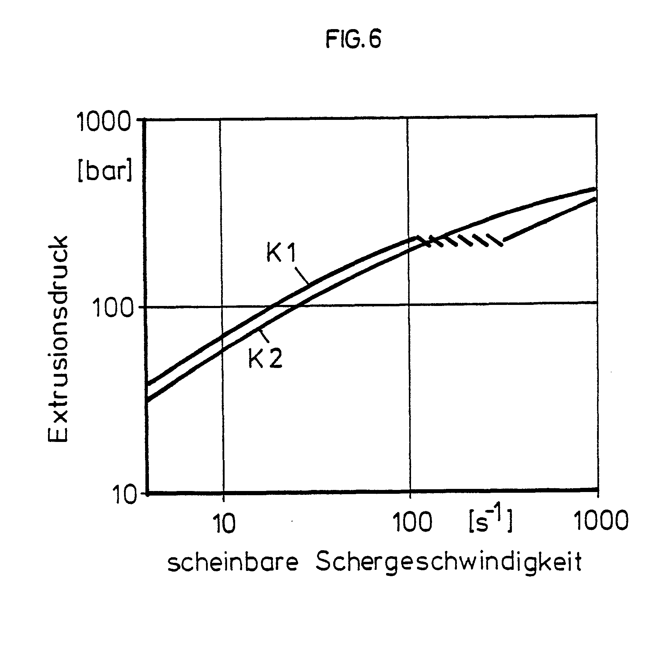

In einem weiteren Beispiel (Figur 6) strömt LLDPE ($MFI_{190/2,16}$= 0,8 g/10 min, Dichte 0,922 g/cm³) bei 150 °C Massetemperatur durch zwei Kreiskapillaren (Bohrungen) mit gleicher Länge von 40 mm. Die eine Kapillare K1 hat eine glatte Wandung mit Innendurchmesser 2 mm, die andere Kapillare K2 besteht auf der gesamten Länge aus Wandelementen nach Figur 3 (kleinster Durchmesser L1 = 2 mm, größter Durchmesser L2 = 4 mm, Stufenhöhe L3' = L3" = 2 mm). Gemessen wurde der Extrusionsdruck (Druckverlust der Kapillaren) bei verschiedenen Volumenströmen V und über der scheinbaren Schergeschwindigkeit 4V/R³ (R = 2 mm) aufgetragen.

Für Schergeschwindigkeiten kleiner 100 s⁻¹ ist der Druckverlust bei Kapillare K2 geringer als bei Kapillare K1. Bei Verwendung der Kapillare K2 ist die Druck-Durchsatz-Charakteristik im gesamten Schergeschwindigkeitsbereich stetig ; bei Verwendung der Kapillare K1 tritt im Bereich 110 bis 130 s⁻¹ eine Druckpulsation auf.

**Patentansprüche**

1. Vorrichtung zum Strangpressen von thermoplastischen Kunststoffen, bei der die Kunststoffschmelze mit Hilfe von Fördereinrichtungen durch ein Strangpreßwerkzeug (1) gefördert wird, dessen Austrittsspalt (6) Wandvertiefungen in Strangpreßrichtung aufeinander folgend aufweist, dadurch gekennzeichnet, daß die kleinste Spaltweite (L1) der Wandvertiefung (7, 8) größer als 0,3 mm und das Verhältnis von größter Spaltweite (L2) zu kleinster Spaltweite (L1) L2/L1 ≥ 1,5 ist.

2. Vorrichtung nach Anspruch 1, dadurch gekennzeichnet, daß der Querschnitt der Wandvertiefung (17, 18) dreieckig und daß das Verhältnis von Länge (L3) der Wandvertiefung zur größten Spaltweite (L2) L3/L2 größer als 0,5 und kleiner als 3 ist.

3. Vorrichtung nach Anspruch 1, dadurch gekennzeichnet, daß der Querschnitt der Wandvertiefung (27, 28) rechteckig ist, daß die Länge (L3) eines Vertiefungselementes aus der Länge (L3') des unvertieften Wandbereichs und aus der Länge (L3") des vertieften Wandbereichs besteht und daß (L3') kleiner als (L3)/2 ist.

4. Vorrichtung nach Anspruch 1 bis 3, dadurch gekennzeichnet, daß der Schnitt durch die Wandvertiefungen (7, 8 ; 17, 18 ; 27, 28) wellenförmig ist oder einen stetigen oder unstetigen Kurvenverlauf aufweist.

5. Vorrichtung nach Anspruch 1 bis 4, dadurch gekennzeichnet, daß der Austrittsspalt (6) aus einer Kombination einzelner Wandvertiefungen (7, 8 ; 17, 18 ; 27, 28) besteht und daß die jeweils engsten Stellen der einzelnen Wandvertiefungen (7, 8 ; 17, 18 ; 27, 28) unterschiedlich groß sind.

4

## Claims

1. A device for extruding thermoplastics, the plastics melt being conveyed by conveying means through an extrusion die (1), the walls of whose outlet gap (6) are provided with recesses arranged one after the other in the direction of extrusion, wherein the smallest width (L1) of the gap between the recesses (7, 8) in the walls is > 0.3 mm, and the ratio of the largest gap width (L2) to the smallest gap width (L1) L2/L1 is ⩾ 1.5.

2. A device as claimed in claim 1, wherein the cross section of the recesses (17, 18) in the walls is triangular, and the ratio of the length (L3) of the recess to the largest gap width (L2) L3/L2 is > 0.5 and < 3.

3. A device as claimed in claim 1, wherein the cross section of the recesses (27, 28) in the walls is rectangular, the length (L3) of one recess element consists of the length (L3') of the non-recessed wall portion and the length (L3'') of the recessed wall portion, and (L3') is < (L3)/2.

4. A device as claimed in claims 1 to 3, wherein the section through the recesses (7, 8 ; 17 ; 18 ; 27, 28) is wavy or in the form of a regular or irregular curve.

5. A device as claimed in claims 1 to 4, wherein the outlet gap (6) consists of a combination of individual recesses (7, 8 ; 17, 18 ; 27, 28), and the narrowest gaps between each pair of individual recesses differ in size.

## Revendications

1. Appareil d'extrusion de matières thermoplastiques, dans lequel la matière plastique fondue est acheminée à l'aide de dispositifs d'avancement à travers une filière d'extrusion (1), dont la paroi de la fente d'extrusion (6) comprend des évidements juxtaposés dans la direction d'extrusion, caractérisé en ce que la plus petite largeur (L1) d'un évidement dans la paroi (7, 8) est supérieure à 0,3 mm et le rapport entre la largeur la plus grande (L2) et la largeur la plus petite (L1) de la fente L2/L1 est égal ou supérieur à 1,5.

2. Appareil suivant la revendication 1, caractérisé en ce que la section d'un évidement dans la paroi (17, 18) est triangulaire et le rapport entre la longueur (L3) d'un évidement et la largeur la plus grande (L2) de la fente est supérieur à 0,5 et inférieur à 3.

3. Appareil suivant la revendication 1, caractérisé en ce que la section d'un évidement dans la paroi (27, 28) est rectangulaire et la longueur (L3) d'un élément d'évidement est constituée par la longueur (L3') de la partie non évidée et la longueur (L3'') de la partie évidée de la paroi, (L3') étant inférieur à (L3)/2.

4. Appareil suivant les revendications 1 à 3, caractérisé en ce que la section des évidements dans la paroi (7, 8 ; 17, 18 ; 27, 28) possède une forme ondulée ou donne une courbe d'une allure régulière ou d'une allure disconstinue.

5. Appareil suivant les revendications 1 à 4, caractérisé en ce que la fente d'extrusion (6) est constituée par une combinaison d'évidements dans la paroi de formes différentes (7, 8 ; 17, 18 ; 27, 28) et les passages les plus étroits entre les différents évidements (7, 8 ; 17, 18 ; 27, 28) sont de dimensions différentes.

Fig.1

Fig. 2

Fig. 3

Fig. 4

Fig. 5

FIG. 6